# EUROPEAN PATENT APPLICATION

(11) **EP 4 770 155 A1**
(43) Date of publication of application: **01.07.2026**
(21) Application number: 24307318.6
(22) Date of filing: 27.12.2024
(51) Int. Cl.: H04W 12/069, H04W 12/106, H04W 12/108

(54) **METHOD AND APPARATUS FOR TRANSMITTING LOCAL COMMAND TO AN EUICC IN IOT CONTEXT**

(71) Applicant: IDEMIA France, 92400 Courbevoie (FR)
(72) Inventor: UGLIETTI, Gianni, 92400 COURBEVOIE (FR); MACUDA, Jacek, 92400 COURBEVOIE (FR)
(74) Representative: Santarelli

(57) **Abstract**

The present invention concerns a method of transmitting a local command by an loT device to a secure element hosted by the loT device, the method comprising: generating the local command; signing the local command with a private key of a device keyset of the loT device; transmitting the signed local command to the secure element along with a device certificate comprising a public key of the device keyset of the loT device, the device certificate being signed by a local management private key obtained from a local management keyset, issued by a local management authority.

## Description

### FIELD OF THE INVENTION

The present disclosure concerns a method and a device for transmitting a local command to an eUICC in an loT context.

### BACKGROUND OF INVENTION

A wireless user terminal, a smartphone, connected objects or any computer device with communication capabilities using a telecommunication network (e.g. mobile (phone) network, wireless network, radiocommunication network) is traditionally provided with a secure element, SE, that may be removable, embedded, discrete or integrated. Such secure elements comprise Universal Integrated Circuit Cards, UICC, as Subscriber Identity Modules, SIM, cards, and their embedded versions known as eUICC for embedded UICC or eSIM (for embedded SIM), their integrated versions known as iUICC (for integrated UICC) or ieUICC (for integrated eUICC). An eUICC module is a hardware secured element, generally of small size, which can be embedded or integrated in a communication device like a smartphone or TCU (for Telematics Control Unit used for connected vehicles) to provide the same functionalities of a traditional SIM card. eUICC are also integrated in many different communicating devices in the context of the so-called Internet of Things, loT.

An SE is typically manufactured by an SE manufacturer, SEM, to be provided to an Original Equipment Manufacturer, OEM, for integration in the devices produced by the OEM. In order to connect to and be able to communicate with a mobile network, a subscription is required with a Mobile Network Operator, MNO. All the parameters associated with the subscription are stored as an MNO profile, also simply called a profile in the following, in the SE. An SE may comprise several MNO profiles, or simply corresponding to different subscriptions with one or several MNOs.

An SE comprises a processor that can execute computer programs, memory for storing programs and data, and communication means for communicating with the final device it is integrated in, and through which it can communicate to a communication network.

SEs are provided by the SEM with an operating system, OS, that implements the functionalities of the SE. These functionalities comprise the implementation of application protocol data unit, APDU, commands as specified in the standard ISO/IEC 7814 part 4, used for communicating with the SE. The operating system of the SE is not to be confused with the operating system that typically runs the final device integrating the SE.

The management of the profiles in the secure element is typically done locally on regular devices under the control of the user of the device. In the context of IoT, this cannot be the case as an loT device is supposed to work autonomously without requiring the intervention of a user. Accordingly, the profile management is deported remotely on a dedicated server named elM (for eSIM loT remote Manager). The elM handles the profiles on the secure element by sending command to the secure element. These commands are signed by the elM in order to allow the secure element to validate its origin before executing the received command. When a secure element, in the context of loT, receives a command that is not signed by the elM, the command is rejected. The only exception regards test or emergency profiles, specifically tagged as such, for which the secure element will accept a local command not initiated by the elM server.

With a growing popularity of private 5G networks used in factories, maintenance centers, repair shops and the like, there is a need to allow IoT devices to switch, by themselves and in a local way, to a profile dedicated to these private networks on their own (which mean, switch command not initiated by the server elM). At the same time, the security of the loT device must not be compromised.

### SUMMARY OF THE INVENTION

The present invention has been devised to address one or more of the foregoing concerns.

According to a first aspect of the invention there is provided a method of transmitting a local command by an loT device to a secure element hosted by the loT device, the method comprising:
- generating the local command;
- signing the local command with a private key of a device keyset of the loT device;
- transmitting the signed local command to the secure element along with a device certificate comprising a public key of the device keyset of the loT device, the device certificate being signed by a local management private key obtained from a local management keyset, issued by a local management authority.

According to embodiments, a value of an anti-replay counter is transmitted along with the signed local command and the device certificate, the anti-replay counter being incremented each time a local command is generated.

According to another aspect of the invention there is provided a method of receiving a local command by a secure element from an loT device hosting the secure element, the method comprising:
- receiving a signed local command along with a device certificate comprising a public key of a device keyset of the loT device, the device certificate being signed by a local management private key obtained from a local management keyset, issued by a local management authority;
- checking the validity of the device certificate signature using a local management certificate received beforehand from a remote profile management server for loT devices, the local management certificate being issued by the local management authority, transmitted by the local management authority to the remote profile management server for IoT devices and comprising a local management public key of the local management keyset;
- if the device certificate signature is valid, checking the validity of the local command signature using the said public key of the device certificate;
- if the local command signature is valid, executing the local command.

According to embodiments, a value of an anti-replay counter is received along with the signed local command and the device certificate, and wherein it is checked that the value of the anti-replay counter is different from any previously received value of the anti-replay counter.

According to embodiments, the method comprises:
- receiving from the remote profile management server for IoT devices a token comprising a maximum number; and
- refusing any new local command when the number of executed local command has reached the maximum number.

According to embodiments, the method comprises:
- receiving from the remote profile management server for IoT devices a token comprising a maximum number associated with a given profile; and
- refusing any new local command when the number of executed local command concerning the given profile has reached the maximum number.

According to another aspect of the invention there is provided an IoT device comprising at least one processor; and at least one memory in communication with the at least one processor, the at least one memory including computer-readable instructions stored thereon for transmitting a local command to a secure element hosted by the loT device that, when executed by the at least one processor, cause the loT device to:
- generate the local command;
- sign the local command with a private key of a device keyset of the loT device;
- transmit the signed local command to the secure element along with a device certificate comprising a public key of the device keyset of the loT device, the device certificate being signed by a local management private key obtained from a local management keyset, issued by a local management authority.

According to another aspect of the invention there is provided a secure element hosted in an IOT device, the secure element comprising at least one processor; and at least one memory in communication with the at least one processor, the at least one memory including computer-readable instructions stored thereon for receiving a local command from the loT device that, when executed by the at least one processor, cause the secure element to:
- receive a signed local command along with a device certificate comprising a public key of a device keyset of the loT device, the device certificate being signed by a local management private key obtained from a local management keyset, issued by a local management authority;
- check the validity of the device certificate signature using a local management certificate received beforehand from a remote profile management server for loT devices, the local management certificate being issued by the local management authority, transmitted by the local management authority to the remote profile management server for IoT devices and comprising a local management public key of the local management keyset;

- if the device certificate signature is valid, check the validity of the local command signature using the said public key of the device certificate;
- if the local command signature is valid, execute the local command.

According to another aspect of the invention there is provided a computer program product for a programmable apparatus, the computer program product comprising a sequence of instructions for implementing a method according to the invention, when loaded into and executed by the programmable apparatus.

According to another aspect of the invention there is provided a computer-readable storage medium storing instructions of a computer program for implementing a method according to the invention.

At least parts of the methods according to the invention may be computer implemented. Accordingly, the present invention may take the form of an entirely hardware embodiment, an entirely software embodiment (including firmware, resident software, micro-code, etc.) or an embodiment combining software and hardware aspects that may all generally be referred to herein as a "circuit", "module" or "system". Furthermore, the present invention may take the form of a computer program product embodied in any tangible medium of expression having computer usable program code embodied in the medium.

Since the present invention can be implemented in software, the present invention can be embodied as computer readable code for provision to a programmable apparatus on any suitable carrier medium. A tangible, non-transitory carrier medium may comprise a storage medium such as a floppy disk, a CD-ROM, a hard disk drive, a magnetic tape device or a solid state memory device and the like. A transient carrier medium may include a signal such as an electrical signal, an electronic signal, an optical signal, an acoustic signal, a magnetic signal or an electromagnetic signal, e.g. a microwave or RF signal.

### BRIEF DESCRIPTION OF THE DRAWINGS

Embodiments of the invention will now be described, by way of example only, and with reference to the following drawings in which:

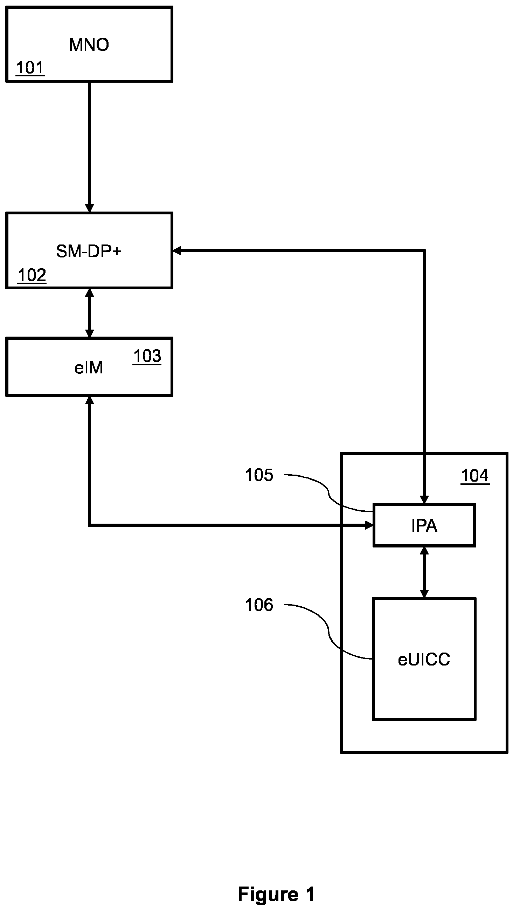

**Figure 1** illustrates loT profile management architecture;
**Figure 2** illustrates more precisely the secure element details and its environment;
**Figure 3** illustrates the main steps of a method for handling local command in an embodiment of the invention;
**Figure 4** illustrates a schematic block diagram of a computing device for implementation of one or more embodiments of the invention.

### DETAILED DESCRIPTION OF THE INVENTION

Connection profiles are generated by a server 102 called SM-DP+ (Subscriber Management - Data Preparation enhanced) following a generation request sent by an operator 101 called MNO (Mobile Network Operator). Connection profiles are generated by the server 102 on the basis of data files or data supplied by the operator 101 as part of the generation request sent by the operator 101.

The SM-DP+ server 102 is a server in charge of preparing (or generating) and distributing (or supplying, or provisioning) the profiles to devices connectable to a cellular communication network. This server 102 implements security measures, managing the encryption keys used to encrypt the profiles and transmitting them to the devices to be loaded and installed in the secure element integrated into the device.

Each device 104, for example, a smartphone, a TCU, a sensor comprises a secure element 106, typically an eUICC.

It should be noted that the device 104 is an information processing device having a processor, memory and I/O. As such, the device 104 is controlled by an operating system, for example Google's Android or Apple's IOS (Android, Google, IOS and Apple are registered trademarks), enabling a set of applications to run on the device. Similarly, the secure element 106 is also an information processing device with its own processor, memory and operating system, enabling applications to run within the secure element. The operating system of the device 104 should not be confused with the operating system of the secure element 106.

In a consumer context, an LPA (Local Profile Assistant) is a set of functions in a device responsible for providing the capability to download encrypted profiles to the secure element. It also presents the local management end user interface to an end user so they can manage the status of profiles on the secure element.

In an loT context, the LPA component of the consumer context (or consumer specification "GSMA SGP.22 - RSP Technical Specification - Version 3.1 Final - 01 December 2023", hereinafter GSMA SGP.22) is separated into two modules - the IPA 105 (IoT Profile Assistant) and the elM 103 (eSIM loT Remote Manager). The elM 103 is a remote profile management server for loT devices. The IPA 105 may be in the device 104 or in the secure element 106. It serves as a proxy between the secure element 106 and the SM-DP+ 102, for example, for profile download but also it serves as a proxy between the secure element 106 and the elM 103, for example, for profile download too or for profiles management. To remotely enable, disable, delete profiles, and trigger profile downloads, the elM 103 sends profile state management operations to the secure element 104. The elM 103, which can facilitate the management of a single device or a fleet of loT devices, may be employed by an IoT OEM to manage its devices.

The IPA agent 105 is used for installing profiles in the secure element integrated into the loT device 104 and it is also responsible for managing profile states or relaying profile state management instructions (or operations) from the elM 103 (e.g. activation, deactivation, deletion, ...). Communication between the elM 103 server and the IPA agent 105 is standardized by GSMA document SGP.32 "eSIM loT Technical Specification, Version 1.2 - 27 June 2024", hereinafter referenced as GSMA SGP.32.

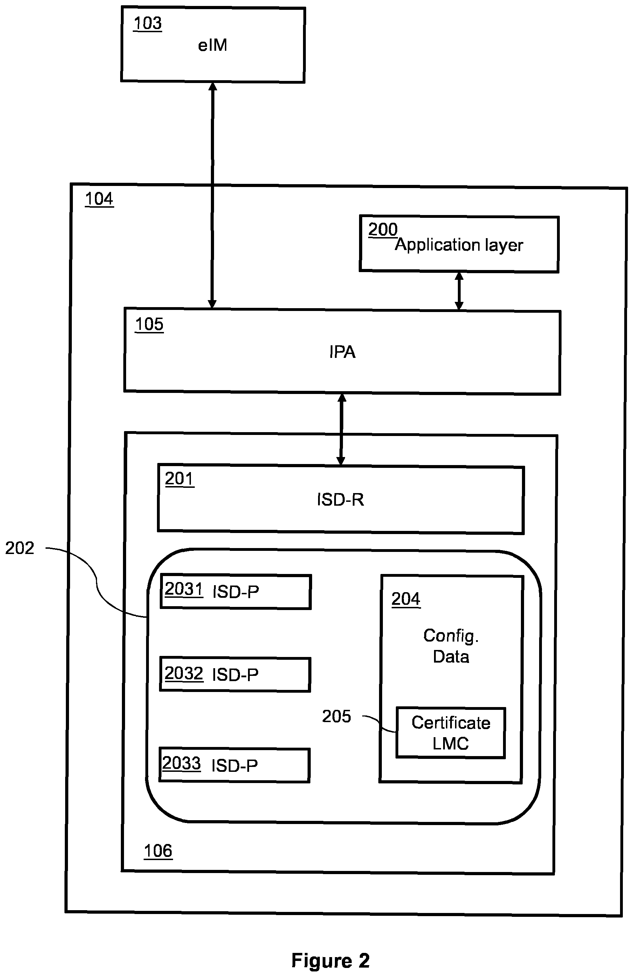

**Figure 2** illustrates more precisely the secure element details and its environment.

The secure element 106 comprises a memory 202 which stores some data. The memory 202 stores one or more connection profiles 2031, 2032 and 2033, named ISD-P standing for Issuer Security Domain Profile. It also comprises configuration data 204. According to some embodiments of the invention, these configuration data comprises a certificate 205, called in this document local management certificate, LMC.

This document describes methods using asymmetric cryptographic keys. An asymmetric cryptographic key comprises a private key and a public key. The private key is used by an owner of the key to encrypt or signed content. The public key is to be used by a recipient of a content encrypted or signed by the private key to decrypt or validate the signature. Asymmetric cryptography is well-known.

In the document, the wording "key" (or wording "keyset") is used to designate an asymmetric key pair comprising the private and public keys. The wording "certificate" is used to refer to the public key of the keyset. A certificate is a package comprising the public key along with possible metadata describing this public key, like information on the issuer of the key (identity of the proprietary of the certificate, for example, its identifier or its name), its owner (the identity of the owner, for example, its identifier or its name), or the purpose of the key, validity period of the certificate, identifier of the certificate, name of the certifying authority, ... The certificate comprises, or is transmitted along, a signature of the certifying authority (the certifying authority grants the integrity and authenticity of the data of the certificate or the certificate itself). The certificate is a format for exchanging public keys between different parties involved in a cryptographic method.

Accordingly, the local management certificate, LMC, comprises the public key of a local management keyset, LMK, which is an asymmetric key pair. The purpose and usage of the LMK and LMC is described in more details below.

The profiles are handled internally in the secure element by a dedicated software module 201 named ISD-R standing for Issuer Security Domain Root.

The secure element 106 can receive profile management commands from the elM 103 through the IPA 105.

The secure element 106 can also receive local commands from the application layer 200 in the device 104. For example, the application layer 200 may detect the availability of a mobile network (for example private and local network) from the modem, not represented, of the device.

The elM is provided with a keyset that identifies the elM and allows it to sign the commands sent to the secure element. The secure element is provided with a certificate comprising the public key of the keyset identifying the eIM. The secure element is therefore able to verify the signature of the commands sent and signed by the elM and to accept these commands once their origin, the elM, is confirmed by validating the signature with the certificate of the elM (i.e. using the public key and data from the elM certificate).

Local commands sent by the application layer 200 are not signed with the private key from the elM keyset. Accordingly, they are refused by the secure element when they do not concern specific test and emergency profiles tagged as such in the memory 202 of the secure element.

The invention aims at providing a secure framework that allows the device to send local commands to the secure element. By "local commands" we mean commands sent and signed by the device and not by the elM server.

According to embodiments, the device manufacturer obtains from a root certificate authority the signature of the local management certificate, LMC, comprising notably the public key of the local management keyset, LMK. By signing the LMC, the root certificate authority guarantees origin, authenticity and integrity of the LMC.

The device manufacturer provides the device with a keyset called the device keyset to be used by the device for encryption and signature along with the corresponding device certificate comprising the public key of the device keyset. According to another embodiment, the device generate itself its device keyset, generate its own device certificate (containing, in particular, the public key of the device keyset) and send it to the device manufacturer. According to embodiments of the invention, the device certificate is signed by the device manufacturer using the private key of the local management keyset, LMK. The device manufacturer can then be seen as a local management authority. By signing the device certificate, the device manufacturer guarantees origin, authenticity and integrity of the device certificate. According to embodiments, local commands are transmitted to the secure element along with the device certificate of the local device. The secure element is provided with the LMC allowing it to validate the device certificate comprised in the command as a valid local command. By validating the device certificate, it shall be understood that the secure element uses the public key contained in the LMC to verify the signature of the device certificate.

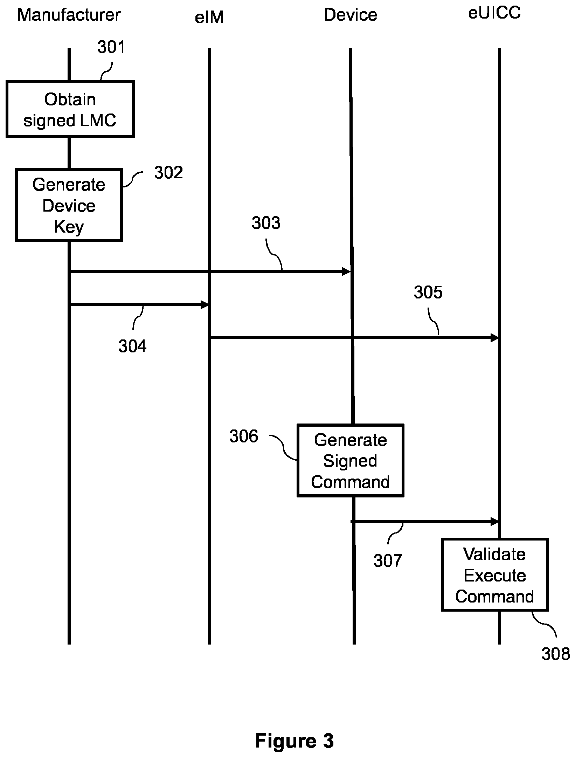

**Figure 3** illustrates the main steps of a method for handling local command in an embodiment of the invention.

In a first preliminary step 301, the device manufacturer generates the LMK, generates the LMC (which contains, in particular, the public key of the LMK), request the signature of the LMC to a root certificate authority and obtains the signed LMC from the root certificate authority. This authority is the root of the security hierarchy. This means that certificates, like the LMC, issued by this authority are signed by the private key of a keyset of this authority and can be validated using the public key of the keyset of this authority which is, contained in, and shared by, a certificate of the root certificate authority.

In a step 302, the device manufacturer generates for each device a device keyset and an associated device certificate comprising, in particular, the public key of the device keyset. According to embodiments of the invention, the device certificate is signed by the device manufacturer using the private key of the LMK.

In a step 303, the device manufacturer provides the device with its device keyset and device certificate. The specifics of this step depend on the manufacturer.

In a step 304, the device manufacturer provides the LMC to the elM. The elM is able to validate the received LMC using the public key of the root certificate, issued by the root certificate authority and previously shared by the root certificate authority to the elM, thus completing the validation chain.

In a step 305, the elM provides the LMC to the secure element built into the device. For example, the LMC may be introduced in the configuration data transmitted by the elM to the secure element.

In an embodiment, the EimConfigurationData data structure of the document GSMA SGP.32 is amended to provide a field named trustedCAforLocalManagement[10] for indicating this local management certificate. Optionally, the EimConfigurationData is further amended to provide a field named counterValueforLocaIManagement[11] that may be used as an initial value for an anti-replay counter as described below.

In an example, the EimConfigurationData may be as follow:

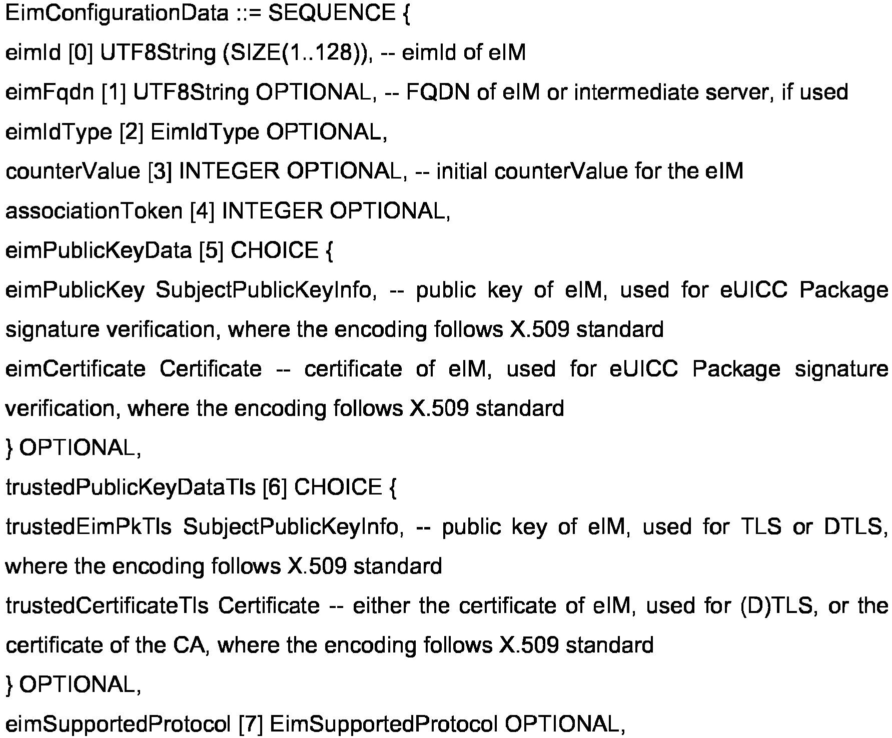

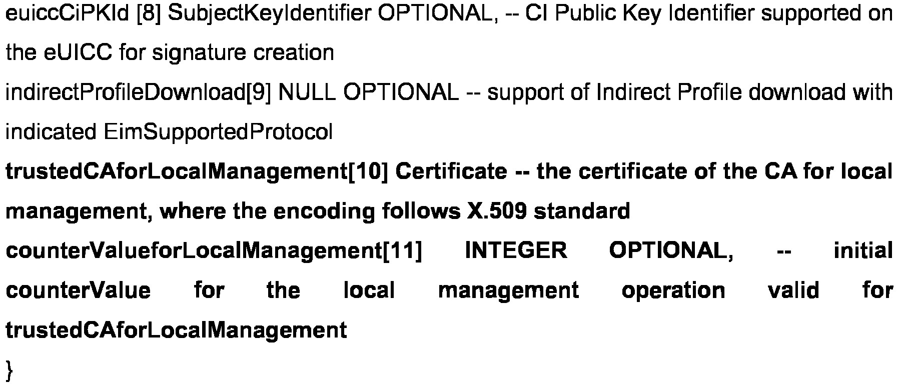

Once these preliminary steps are executed, the secure element is able to validate the origin of a local command emitted by the device hosting the secure element.

In a step 306, the device, meaning the application layer 200 of the device, generate a local command for the secure element. This local command is signed by the device using its own device keyset, more specifically the private key of the device keyset is used to sign the command. The signed local command is embedded in a message for the secure element along with the device certificate of the device.

In some embodiments, the signed local command is associated with a counter value. This counter value is incremented by the device each time a local command is generated and aims at preventing a replay of the local command.

In an example, the local command is as follows:

```
 LocalCommand :: == SEQUENCE {
 iccid Iccid, -- ICCID
 }
```

Where the ICCID is an identifier identifying a profile in the secure element. The local command itself may concern the installation, the enabling, the disabling or the deletion of the profile identified by the ICCID.

This local command is embedded in a signed local command:

```
 LmCommandSigned :: == SEQUENCE
 {
 eidValue [APPLICATION 26] Octet16, -- Tag '5A'
 counterValueforLocalManagement [1] INTEGER,
 localcommand LocalCommand
 }
```

Where the eidValue is a tag identifying the targeted eUICC component or hardware (eUICC identifier), counterValueforLocalManagement is the anti-replay counter value, the localcommand is the local command as defined above.

At last, the signed local command is embedded in an authenticated local management message as follows:

```
 Authenticated Local Management ::= [99] SEQUENCE {
 ImcommandSigned LmCommandSigned,
 ImcommandSignature [APPLICATION 55] OCTET STRING, -- Tag '5F37'
 deviceCertificateForLM[10] Certificate -- the certificate of the device for local
 management, where the encoding follows X.509 standard
 }
```

Where the LmCommandSigned is the local command embedded in a signed local command as defined above, ImcommandSignature is the signature of the LmCommandSigned, '5F37' is a tag announcing the following certificate field, and deviceCertificateForLM is the device certificate of the device generating the command.

In a step 307, the authenticated local management message is transmitted to the secure element, typically through the IPA 105.

In a step 308, the secure element receives the authenticated local management message. In order to be able to accept the command, the secure element obtains the signed local command and the associated device certificate.

Using the local management certificate (in particular, the public key contained into the local management certificate), LMC, provided by the elM in step 305, the secure element validates the signature of the received device certificate. It allows the secure element to validate that the device certificate is a valid certificate issued by the device manufacturer. Once the device certificate validated, it can be used (in particular, the public key contained into the device certificate) to validate the signature of the signed local command as being validly signed by the local device. These two steps of signature validation ensure that the received local command has been issued by the local device and therefore can be trusted.

In the embodiments using an anti-replay counter, the value of the anti-replay counter received in the command is compared to the counter values already received. The value of the anti-replay counter can be calculated by incrementing or decrementing the counter value and/or consist in generating a new value according to a particular generation algorithm. It is checked that the received value is different from any counter value already received. By doing so, an authenticated local management message received several times is only accepted once.

By using the proposed scheme, the secure element of an IoT device may be allowed to execute local command sent by the device hosting the secure element with a strict validation of its origin.

In some embodiments, a limited number of local commands is admitted according to the proposed method. In these embodiments, a maximum number of local command or execution of local command is defined by the device manufacturer. This maximum number is transmitted by the elM to the secure element. For example, the elM can generate a token comprising this maximum number of local commands and transmit the token to the secure element. In an embodiment, the token is generated by the device manufacturer, signed with the private key of the LMK, transmitted to the elM, and then transmitted by the elM to the eUICC. This way, the secure element is able to validate the signature of the token by using the public key shared to the eUICC by the LMC.

In an embodiment, the token is transmitted in the configuration data as an additional field in the EimConfigurationData data structure.

The secure element receiving such token initiates a counter that is incremented or decrementing each time the secure element accepts and executes a local command. When this counter reaches the maximum number transmitted, the secure element stops accepting further local commands.

In some embodiments, the maximum number is associated with a given profile, for example using its ICCID. In this embodiment, the secure element initiates a counter associated with the given profile and increments or decrements this counter each time it accepts and executes a local command implicating this given profile. When the counter reaches the maximum number transmitted, the secure element stops accepting further local commands implicating this given profile.

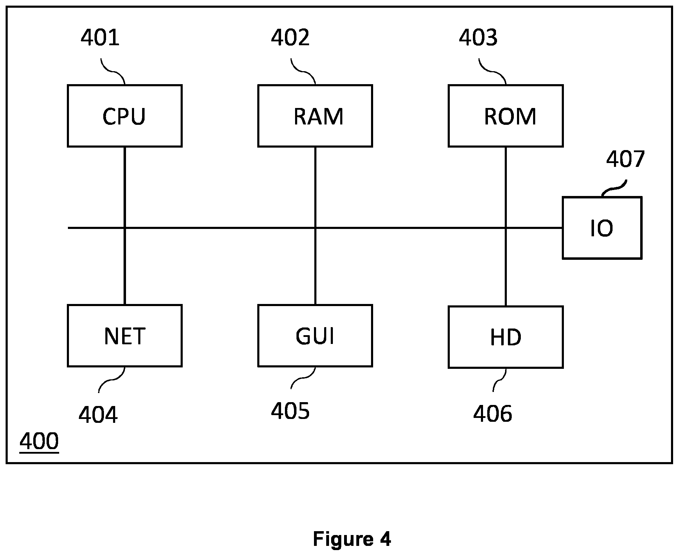

**Figure 4** is a schematic block diagram of a computing device 400 for implementation of one or more embodiments of the invention. The computing device 400 may be a device such as a micro-computer, a workstation or a light portable device. The computing device 400 comprises a communication bus connected to:
- a central processing unit 401, such as a microprocessor, denoted CPU;
- a random access memory 402, denoted RAM, for storing the executable code of the method of embodiments of the invention as well as the registers adapted to record variables and parameters necessary for implementing the method according to embodiments of the invention, the memory capacity thereof can be expanded by an optional RAM connected to an expansion port for example;
- a read only memory 403, denoted ROM, for storing computer programs for implementing embodiments of the invention;
- a network interface 404, denoted NET, is typically connected to a communication network over which digital data to be processed are transmitted or received. The network interface 404 can be a single network interface, or composed of a set of different network interfaces (for instance wired and wireless interfaces, or different kinds of wired or wireless interfaces). Data packets are written to the network interface for transmission or are read from the network interface for reception under the control of the software application running in the CPU 401;
- a graphical user interface 405, denoted GUI, may be used for receiving inputs from a user or to display information to a user;
- a hard disk 406 denoted HD may be provided as a mass storage device;
- an I/O module 407 may be used for receiving/sending data from/to external devices such as a video source or display.

The executable code may be stored either in read only memory 403, on the hard disk 406 or on a removable digital medium such as for example a disk. According to a variant, the executable code of the programs can be received by means of a communication network, via the network interface 404, in order to be stored in one of the storage means of the communication device 400, such as the hard disk 406, before being executed.

The central processing unit 401 is adapted to control and direct the execution of the instructions or portions of software code of the program or programs according to embodiments of the invention, which instructions are stored in one of the aforementioned storage means. After powering on, the CPU 401 is capable of executing instructions from main RAM memory 402 relating to a software application after those instructions have been loaded from the program ROM 403 or the hard-disc (HD) 406 for example. Such a software application, when executed by the CPU 401, causes the steps of the flowcharts of the invention to be performed.

Any step of the algorithms of the invention may be implemented in software by execution of a set of instructions or program by a programmable computing machine, such as a PC ("Personal Computer"), a DSP ("Digital Signal Processor") or a microcontroller; or else implemented in hardware by a machine or a dedicated component, such as an FPGA ("Field-Programmable Gate Array") or an ASIC ("Application-Specific Integrated Circuit").

Although the present invention has been described hereinabove with reference to specific embodiments, the present invention is not limited to the specific embodiments, and modifications will be apparent to a skilled person in the art which lie within the scope of the present invention.

Many further modifications and variations will suggest themselves to those versed in the art upon making reference to the foregoing illustrative embodiments, which are given by way of example only and which are not intended to limit the scope of the invention, that being determined solely by the appended claims. In particular the different features from different embodiments may be interchanged, where appropriate.

Each of the embodiments of the invention described above can be implemented solely or as a combination of a plurality of the embodiments. Also, features from different embodiments can be combined where necessary or where the combination of elements or features from individual embodiments in a single embodiment is beneficial.

In the claims, the word "comprising" does not exclude other elements or steps, and the indefinite article "a" or "an" does not exclude a plurality. The mere fact that different features are recited in mutually different dependent claims does not indicate that a combination of these features cannot be advantageously used.

## Claims

1. A method of transmitting a local command by an loT device to a secure element hosted by the loT device, the method comprising:
- generating the local command;
- signing the local command with a private key of a device keyset of the loT device;
- transmitting the signed local command to the secure element along with a device certificate comprising a public key of the device keyset of the loT device, the device certificate being signed by a local management private key obtained from a local management keyset, issued by a local management authority.

2. The method of claim 1, wherein a value of an anti-replay counter is transmitted along with the signed local command and the device certificate, the anti-replay counter being incremented each time a local command is generated.

3. A method of receiving a local command by a secure element from an loT device hosting the secure element, the method comprising:
- receiving a signed local command along with a device certificate comprising a public key of a device keyset of the loT device, the device certificate being signed by a local management private key obtained from a local management keyset, issued by a local management authority;
- checking the validity of the device certificate signature using a local management certificate received beforehand from a remote profile management server for loT devices, the local management certificate being issued by the local management authority, transmitted by the local management authority to the remote profile management server for IoT devices and comprising a local management public key of the local management keyset;
- if the device certificate signature is valid, checking the validity of the local command signature using the said public key of the device certificate;
- if the local command signature is valid, executing the local command.

4. The method of claim 3, wherein a value of an anti-replay counter is received along with the signed local command and the device certificate, and wherein it is checked that the value of the anti-replay counter is different from any previously received value of the anti-replay counter.

5. The method of claim 3, wherein the method comprises:
- receiving from the remote profile management server for IoT devices a token comprising a maximum number; and
- refusing any new local command when the number of executed local command has reached the maximum number.

6. The method of claim 3, wherein the method comprises:
- receiving from the remote profile management server for IoT devices a token comprising a maximum number associated with a given profile; and
- refusing any new local command when the number of executed local command concerning the given profile has reached the maximum number.

7. An loT device comprising at least one processor; and at least one memory in communication with the at least one processor, the at least one memory including computer-readable instructions stored thereon for transmitting a local command to a secure element hosted by the loT device that, when executed by the at least one processor, cause the loT device to:
- generate the local command;
- sign the local command with a private key of a device keyset of the loT device;
- transmit the signed local command to the secure element along with a device certificate comprising a public key of the device keyset of the loT device, the device certificate being signed by a local management private key obtained from a local management keyset, issued by a local management authority.

8. A secure element hosted in an IOT device, the secure element comprising at least one processor; and at least one memory in communication with the at least one processor, the at least one memory including computer-readable instructions stored thereon for receiving a local command from the loT device that, when executed by the at least one processor, cause the secure element to:
- receive a signed local command along with a device certificate comprising a public key of a device keyset of the loT device, the device certificate being signed by a local management private key obtained from a local management keyset, issued by a local management authority;
- check the validity of the device certificate signature using a local management certificate received beforehand from a remote profile management server for loT devices, the local management certificate being issued by the local management authority, transmitted by the local management authority to the remote profile management server for IoT devices and comprising a local management public key of the local management keyset;
- if the device certificate signature is valid, check the validity of the local command signature using the said public key of the device certificate;
- if the local command signature is valid, execute the local command.

9. A computer program product for a programmable apparatus, the computer program product comprising a sequence of instructions for implementing a method according to any one of claims 1 to 6, when loaded into and executed by the programmable apparatus.

10. A computer-readable storage medium storing instructions of a computer program for implementing a method according to any one of claims 1 to 6.
